# EUROPEAN PATENT SPECIFICATION

(11) **EP 0 895 407 B1**
(45) Date of publication and mention of the grant of the patent: **24.07.2002**
(21) Application number: 98304302.7
(22) Date of filing: 01.06.1998
(51) Int. Cl.: H04N 1/50

(54) **Colour registration method in image forming apparatus**
Farbregistrierverfahren für Bilderzeugungsvorrichtung
Procédé de repérage des couleurs pour appareil de formation d'image

(30) Priority: 01.08.1997 KR 9736871
(43) Date of publication of application: 03.02.1999
(73) Proprietor: Samsung Electronics Co., Ltd., Suwon-city, Kyungki-do (KR)
(72) Inventor: Kim, Nam-ryoung, Paldal-gu, Suwon-city,Kyungki-do,442-470 (KR)
(74) Representative: Chugg, David John

(56) References cited:
- EP-A- 0 679 018
- WO-A-97/19388
- US-A- 5 444 469
- US-A- 5 587 771

## Description

The present invention relates to a colour registration adjusting method in an image forming apparatus, and more particularly, to a colour registration adjusting method in an image forming apparatus, for electronically adjusting colour registration of a main scanning direction using an edge forming algorithm of a photoreceptor belt.

An image forming apparatus reproduces characters or images onto a recording medium according to transferred characters or image data signals, and generally includes a photoreceptor member for forming a latent electrostatic image, e.g., a photoreceptor drum or a photoreceptor belt, a charging unit for charging the photoreceptor member, an exposing unit for forming a latent electrostatic image having a predetermined pattern by scanning light on the charged photoreceptor member, a developing unit for developing the latent electrostatic image by supplying a developing medium, e.g., a toner or a developer liquid, on the exposed latent electrostatic image, and a transfer member for transferring the developed image to the recording medium by applying pressure or heat.

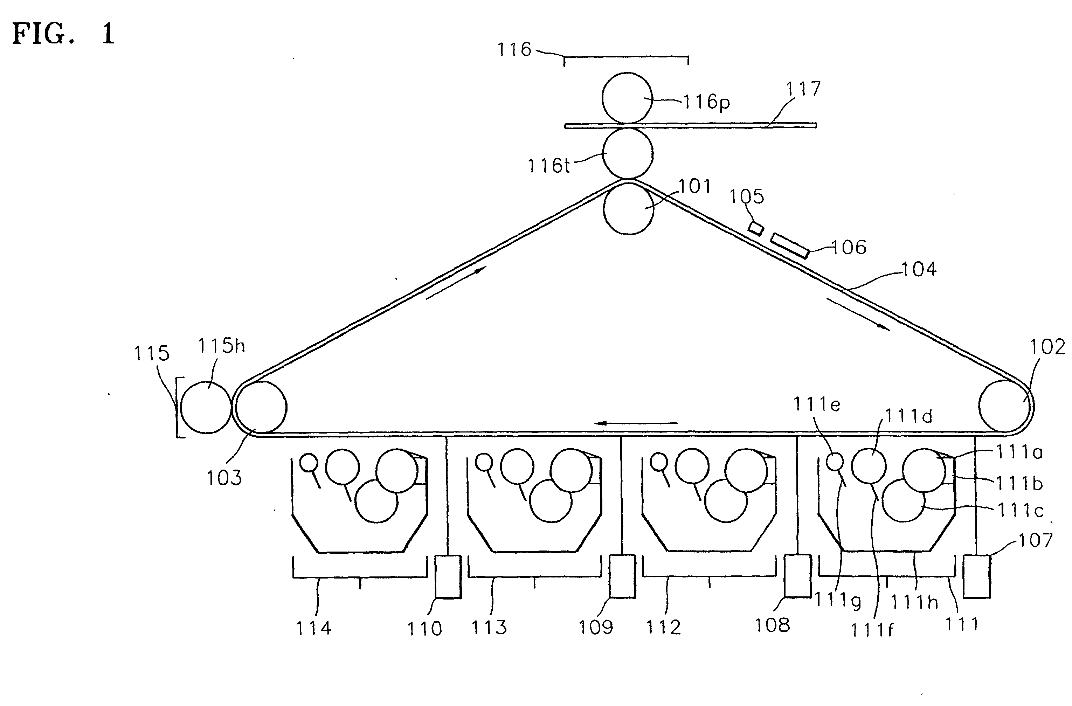

Figure 1 is a schematic diagram of a general image forming apparatus.

Referring to Figure 1, the general image forming apparatus includes a photoreceptor belt 104 installed to be capable of circulating around first, second and third belt rollers 101, 102 and 103, a discharger 105 for removing charges remaining on the photoreceptor belt 104, a charger 106 for newly generating charges on the photoreceptor belt 104, exposure units 107, 108, 109 and 110 each having a laser scanning unit (not shown) for scanning a laser beam for selectively discharging the image forming portion of the photoreceptor belt 104 to be formed into an image shaped pattern, development units 111, 112, 113 and 114 for developing the latent electrostatic image formed on the photoreceptor belt 104 using a developer liquid, a drying unit 115 for drying the developer liquid supplied to the latent image, and a transfer unit 116 for transferring a developed arbitrarily image formed on the photoreceptor belt 104 to a recording medium 117 such as a recording sheet or a film.

Here, the development unit 111 includes a development roller 111a for coating the developer liquid on the photoreceptor belt 104, a developer liquid supplier 111b for supplying the developer liquid to the development roller 111a, a cleaning roller 111c for eliminating the developer liquid embedded on the rear surface of the development roller 111a, first and second squeegee rollers 111d and 111e for eliminating the developer liquid remaining on the photoreceptor belt 104, first and second blades 111f and 111g for eliminating the developing embedded on the first and second squeegee rollers 111d and 111e, and a developer liquid recovery reservoir 111h for recovering the developer liquid removed by the cleaning roller 111c and the blades 111f and 111g. The drying unit 115 includes a heating roller 115h for drying the developer liquid embedded on the photoreceptor belt 104. The transfer unit 116 includes a transfer roller 116t closely pressing against and rotating relative to the first belt roller 101 with the photoreceptor belt 104 interposed therebetween, for receiving the image on the photoreceptor belt 104, and a fixing roller 116p closely pressing against and rotating relative to the transfer roller 116t, for fixing the image transferred to the transfer roller 116t onto the recording sheet 117.

In the image forming apparatus having the aforementioned configuration, error factors related to laser beam scanning will be described.

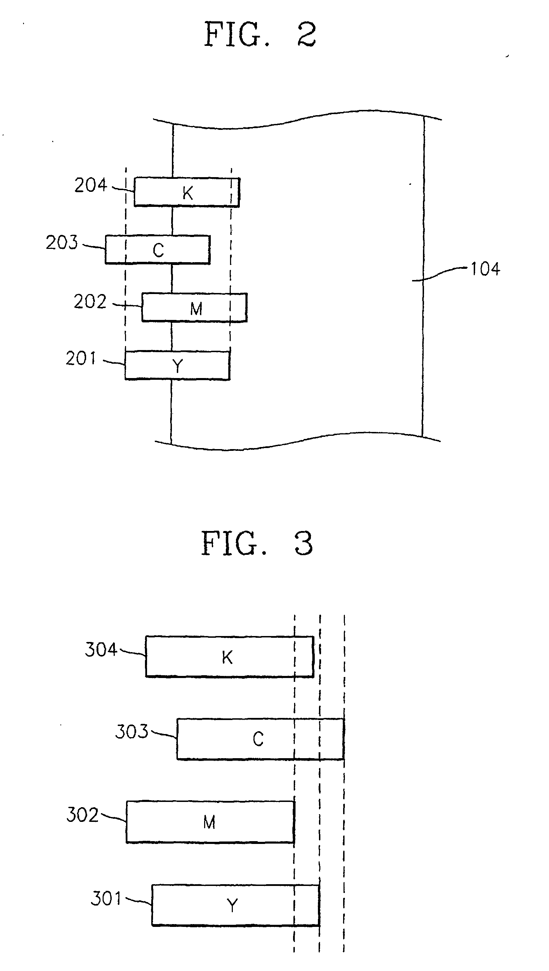

First, the state of the respective edge detectors for colours Y (yellow), M (magenta), C(cyan) and K (black), provided in the photoreceptor belt 104, will be described. As shown in Figure 2, based on a Y-belt edge detector 201, the respective M-, C- and K-belt edge detectors 202, 203 and 204 are not aligned along a straight line. Thus, an error is generated in scanning a laser beam. In this case, if the resolution of the main scanning direction, i.e., perpendicular to the travelling direction of the photoreceptor belt, is 600 dpi, the precision in the installation (arrangement) of the belt edge detectors must be at least within 1/600 inch (0.00423 cm). If the amount of mis-colour registration is intended to be within 1/5 pixels, the precision in the arrangement of the Y-, M-, C- and K-belt edge detectors along a line must be within 1/(5×600) inch (0.00085 cm). However, it is almost impossible to adjust the detectors mechanically in such a precision. Thus, the detectors must be adjusted electronically.

Next, as shown in Figure 3, the respective scanners 301, 302, 303 and 304 for colours Y, M, C and K are not aligned along a straight line, which causes an error in scanning a laser beam. This is also very difficult to correct mechanically.

Another error factor in the laser beam scanning is belt weaving. Even when the photoreceptor belt 104 is steered while being driven, variance is generated in the main scanning direction, which causes an error in scanning a laser beam.

Finally, a defect of the photoreceptor belt 104 itself may be involved in the error related to the laser beam scanning. In other words, if the edges of the photoreceptor belt 104 are not straight, an error is generated in scanning a laser beam.

The above-described error factors cannot be corrected mechanically, and must be corrected electronically, instead.

With a view to solve or reduce the above problems, it is an aim of preferred embodiments of the present invention to provide a colour registration adjusting method in an image forming apparatus for electronically adjusting colour registration of a main scanning direction using an edge forming algorithm of a photoreceptor belt.

According to the invention, there is provided a colour registration adjusting method in an image forming apparatus comprising the steps of: (a) discriminating whether a detected pulse width (PW_{D}), corresponding to the actual position of the edge of a photoreceptor belt with respect to the position of an edge detector, is smaller than an expected pulse width (PW_{E}) therefor or not; (b) setting the detected pulse width to a scanning start signal if the detected pulse width (PW_{D}) is smaller than the expected pulse width (PW_{E}) in the step (a), and setting a next expected pulse width to have a value obtained by subtracting a predetermined value from the currently expected pulse width (PW_{E}); (c) setting the expected pulse width (PW_{E}) to a scanning start signal if the detected pulse width (PW_{D}) is greater than or equal to the expected pulse width (PW_{E}) in the step (a), and, to set the next expected pulse width whilst correcting for differences in the start positions of the image scanners for different colours, by discriminating whether the counted value of a pulse is smaller than an offset value; and (d) if the pulse counted value is less than the offset value in step (c), setting a next expected pulse width to have a value obtained by subtracting a predetermined value from the currently expected pulse width (PW_{E}) (c); otherwirse: (e) if the pulse counted value is greater than or equal to the offset in step (c) then setting a value next expected pulse width value to have a value obtained by adding a predetermined value to the currently expected pulse width.

Preferably, the next expected pulse width is set to a value obtained by subtracting 1 from the currently expected pulse width in the step (b).

Preferably, the next expected pulse width is set to a value obtained by subtracting 1 from the currently expected pulse width in the step (d).

Preferably, the next expected pulse width is set to a value obtained by adding 1 to the currently expected pulse width in the step (e).

For a better understanding of the invention, and to show how embodiments of the same may be carried into effect, reference will now be made, by way of example, to the accompanying diagrammatic drawings, in which:
Figure 1 is a schematic diagram of a general image forming apparatus;
Figure 2 illustrates the state of the arrangement of the respective Y-, M-, C- and K-belt edge detectors misaligned in the image forming apparatus shown in Figure 1;
Figure 3 illustrates the state of the arrangement of the respective Y-, M-, C- and K-belt scanners misaligned in the image forming apparatus shown in Figure 1; and
Figure 4 is a flow chart illustrating a method for driving developing devices of an image forming apparatus according to the present invention.

In embodiments of the present invention, edge detectors 201-204 are each arranged for detecting the edge of photoreceptor belt 104 and to generate a pulse when the detectors detect the edge of the belt 104. The pulse width is related to a scanning start signal of the scanners 301-304.

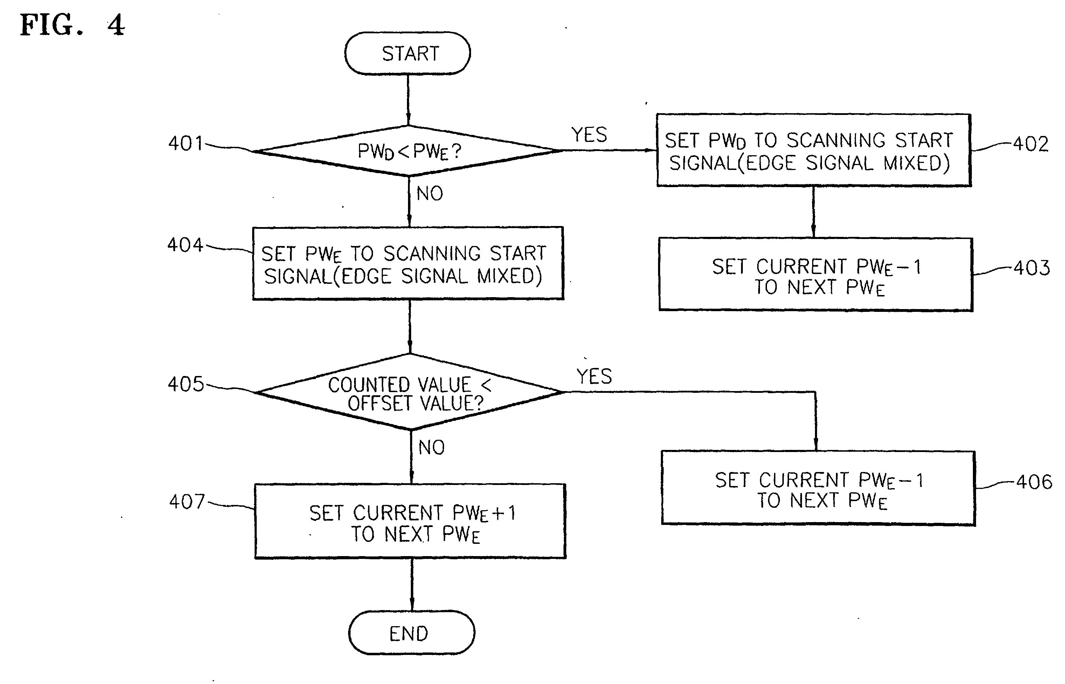

Referring to Figure 4, the colour registration adjusting method in an image forming apparatus according to the present invention may be implemented as follows. First, it is discriminated whether a detected pulse width (PW_{D}) corresponding to the actual position of the edge of a photoreceptor belt with respect to the position of an edge detector is smaller than an expected pulse width (PW_{E}) therefor or not (step 401). If the detected pulse width (PW_{D}) is smaller than the expected pulse width (PW_{E}) in the step 401, then the detected pulse width (PW_{D}) is set to a scanning start signal (an edge signal mixed) (step 402). The next expected pulse width (PW_{E}) is then set by decreasing the currently expected pulse width by 1 such that a smaller pulse width is expected next time (step 403). If the detected pulse width (PW_{D}) is greater than or equal to the expected pulse width (PW_{E}) in the step 401, the expected pulse width (PW_{E}) is set to a scanning start signal (an edge signal mixed) (step 404). To set the next expected pulse width (PW_{E}), it is discriminated whether the counted value of a pulse is smaller than an offset value, which is a value for correcting differences among the start positions of the respective Y-, M-, C- and K-scanners, (step 405). If the pulse counted value is smaller than the offset value in the step 405, a value obtained by subtracting 1 from the currently expected pulse width (PW_{E}) is set to the next expected pulse width (PW_{E}) (step 406). If the pulse counted value is greater than or equal to the offset value in the step 405, a value obtained by adding 1 to the currently expected pulse width (PW_{E}) is set to the next expected pulse width (PW_{E}) (step 407).

Throughout the above-described sequence, the edges of the photoreceptor belt are within the detection range of a photodetector (not shown). The expected pulse width (PW_{E}) is automatically adjusted to be smaller than the detected pulse width (PW_{D}) wherever the edge of the photoreceptor belt is positioned in the detection belt of the photodetector. Accordingly, mis-registration of colour in the main scanning direction of a laser beam can be adjusted precisely.

As described above, in the colour registration adjusting method according to the present invention, the detected pulse width and the expected pulse width for the edge of a photoreceptor belt are compared to each other to set the result to a scanning start signal (an edge signal mixed). Particularly, since some of the next expected pulse widths are discriminated by comparing the pulse counted value and offset value, the mis-registration of colour in the main scanning direction of a laser beam can be adjusted quantitatively.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A colour registration adjusting method in an image forming-apparatus comprising the steps of:
(a) discriminating whether a detected pulse width (PW_{D}), corresponding to the actual position of the edge of a photoreceptor belt with respect to the position of an edge detector, is smaller than an expected pulse width (PW_{E}) therefor or not;
(b) setting the detected pulse width to a scanning start signal if the detected pulse width (PW_{D}) is smaller than the expected pulse width (PW_{E}) in the step (a), and setting a next expected pulse width to have a value obtained by subtracting a predetermined value from the currently expected pulse width (PW_{E});
(c) setting the expected pulse width (PW_{E}) to a scanning start signal if the detected pulse width (PW_{D}) is greater than or equal to the expected pulse width (PW_{E}) in the step (a), and, to set the next expected pulse width whilst correcting for differences in the start positions of the image scanners for different colours, by discriminating whether the counted value of a pulse is smaller than an offset value; and
(d) if the pulse counted value is less than the offset value in step (c), setting a next expected pulse width to have a value obtained by subtracting a predetermined value from the currently expected pulse width (PW_{E}) (c); otherwise:
(e) if the pulse counted value is greater than or equal to the offset in step (c) then setting a value next expected pulse width value to have a value obtained by adding a predetermined value to the currently expected pulse width.

2. The method according to claim 1, wherein the next expected pulse width is set to a value obtained by subtracting 1 from the currently expected pulse width in the step (b).

3. The method according to claim 1 or 2, wherein the next expected pulse width is set to a value obtained by subtracting 1 from the currently expected pulse width in the step (d).

4. The method according to claim 1, 2 or 3, wherein the next expected pulse width is set to a value obtained by adding 1 to the currently expected pulse width in the step (e).

## Patentansprüche

1. Farbdeckungs-Regulierverfahren für eine Bilderzeugungsvorrichtung, das die folgenden Schritte umfasst:
(a) Feststellen, ob eine erfasste Impulsbreite (PW_{D}), die der Ist-Position der Kante eines Fotorezeptorbandes in Bezug auf die Position eines Kanten-Detektors entspricht, kleiner ist als eine dafür erwartete Impulsbreite (PW_{E}) oder nicht;
(b) Einstellen der erfassten Impulsbreite auf ein Abtast-Startsignal, wenn die erfasste Impulsbreite (PW_{D}) in dem Schritt (a) kleiner ist als die erwartete Impulsbreite (PW_{E}) und Einstellen einer nächsten erwarteten Impulsbreite, so dass sie einen Wert hat, der bestimmt wird, indem ein vorgegebener Wert von der aktuell erwarteten Impulsbreite (PW_{E}) subtrahiert wird;
(c) Einstellen der erwarteten Impulsbreite (PW_{E}) auf ein Abtast-Startsignal, wenn die erfasste Impulsbreite (PW_{D}) in dem Schritt (a) größer ist als die erwartete Impulsbreite (PW_{E}) oder genauso groß wie diese, und Einstellen der nächsten erwarteten Impulsbreite bei gleichzeitiger Korrektur von Differenzen der Startpositionen der Bildabtasteinrichtungen für verschiedene Farben, indem festgestellt wird, ob der gezählte Wert eines Impulses kleiner ist als ein Verschiebungswert; und
(d) Einstellen einer nächsten erwarteten Impulsbreite, so dass sie einen Wert hat, der bestimmt wird, indem ein vorgegebener Wert von der aktuell erwarteten Impulsbreite (PW_{E}) subtrahiert wird, wenn der gezählte Wert des Impulses in Schritt (c) kleiner ist als der Verschiebungswert; ansonsten:
(e) Einstellen eines nächsten erwarteten Impulsbreitenwertes, so dass er einen Wert hat, der bestimmt wird, indem ein vorgegebener Wert zu der aktuell erwarteten Impulsbreite addiert wird, wenn der gezählte Wert des Impulses in Schritt (c) größer ist als die Verschiebung oder ihr entspricht.

2. Verfahren nach Anspruch 1, wobei die nächste erwartete Impulsbreite auf einen Wert eingestellt wird, der bestimmt wird, indem in dem Schritt (b) von der aktuell erwarteten Impulsbreite 1 subtrahiert wird.

3. Verfahren nach Anspruch 1 oder 2, wobei die nächste erwartete Impulsbreite auf einen Wert eingestellt wird, der bestimmt wird, indem in dem Schritt (d) von der aktuell erwarteten Impulsbreite 1 subtrahiert wird.

4. Verfahren nach Anspruch 1, 2 oder 3, wobei die nächste erwartete Impulsbreite auf einen Wert eingesteift wird, der bestimmt wird, indem in dem Schritt (e) zu der aktuell erwarteten Impulsbreite 1 addiert wird.

## Revendications

1. Procédé d'ajustement de repérage de couleurs dans un dispositif de formation d'image comportant les étapes consistant à :
(a) distinguer si une largeur d'impulsion détectée (PW_{D}), correspondant à la position réelle du bord d'une courroie photoréceptrice par rapport à la position d'un détecteur de bord, est plus petite ou non qu'une largeur d'impulsion attendue (PW_{E}),
(b) affecter la largeur d'impulsion détectée à un signal de départ de balayage si la largeur d'impulsion détectée (PW_{D}) est plus petite que la largeur d'impulsion attendue (PW_{E}) à l'étape (a), et établir une largeur d'impulsion attendue suivante à une valeur obtenue en soustrayant une valeur prédéterminée depuis la largeur d'impulsion actuellement attendue (PW_{E}),
(c) affecter la largeur d'impulsion attendue (PW_{E}) à un signal de départ de balayage si la largeur d'impulsion détectée (PW_{D}) est supérieure ou égale à la largeur d'impulsion attendue (PW_{E}) à l'étape (a), et, établir la largeur d'impulsion attendue suivante tout en corrigeant les différences des positions de départ du dispositif de balayage d'image pour différentes couleurs, en distinguant si la valeur décomptée d'une impulsion est plus petite qu'une valeur de décalage, et
(d) si la valeur décomptée d'impulsion est inférieure à la valeur de décalage à l'étape (c), établir une largeur d'impulsion attendue suivante à une valeur obtenue en soustrayant une valeur prédéterminée depuis la largeur d'impulsion actuellement attendue (PW_{E}) (c), sinon :
(e) si la valeur décomptée d'impulsion est supérieure ou égale au décalage à l'étape (c), alors établir une valeur de largeur d'impulsion attendue suivante à une valeur obtenue en ajoutant une valeur prédéterminée à la largeur d'impulsion actuellement attendue.

2. Procédé selon la revendication 1, dans lequel la largeur d'impulsion attendue suivante est établie à une valeur obtenue en soustrayant 1 depuis la largeur d'impulsion actuellement attendue à l'étape (b).

3. Procédé selon la revendication 1 ou 2, dans lequel la largeur d'impulsion attendue suivante est établie à une valeur obtenue en soustrayant 1 depuis la largeur d'impulsion actuellement attendue à l'étape (d).

4. Procédé selon la revendication 1, 2 ou 3, dans lequel la largeur d'impulsion attendue suivante est établie à une valeur obtenue en ajoutant 1 à la largeur d'impulsion actuellement attendue à l'étape (e).
